# EUROPÄISCHE PATENTSCHRIFT

(11) **EP 0 902 770 B1**
(45) Veröffentlichungstag und Bekanntmachung des Hinweises auf die Patenterteilung: **11.04.2001**
(21) Anmeldenummer: 97921784.1
(22) Anmeldetag: 25.04.1997
(51) Int. Cl.: C04B 28/06

(54) **VERFAHREN ZUR HERSTELLUNG VON BAUSTOFFEN**
PROCESS FOR PRODUCING BUILDING MATERIAL
PROCEDE POUR LA PRODUCTION DE MATERIAUX DE CONSTRUCTION

(30) Priorität: 13.05.1996 DE 19619263; 15.10.1996 US 730551
(43) Veröffentlichungstag der Anmeldung: 24.03.1999
(73) Patentinhaber: YTONG AG, D-80797 München (DE)
(72) Erfinder: HUMS, Dieter, D-86529 Schrobenhausen (DE); LIPPE, Klaus, F., D-86529 Schrobenhausen (DE)
(74) Vertreter: Solf, Alexander, Dr.
(86) Internationale Anmeldenummer: EP9702154
(87) Internationale Veröffentlichungsnummer: WO9743227

(56) Entgegenhaltungen:
- EP-A- 0 119 662
- DE-A- 2 246 378
- DE-A- 2 739 181
- GB-A- 2 250 282
- CHEMICAL ABSTRACTS, vol. 97, no. 8, 23.August 1982 Columbus, Ohio, US; abstract no. 59966a, DENKI KAGAKU: "high-strength cement products" XP000184593 & JP 57 051 157 A
- CHEMICAL ABSTRACTS, vol. 103, no. 12, 23.September 1985 Columbus, Ohio, US; abstract no. 92132r, KIKUSUI KAGAKU: "expandable mortar compositions" XP000184111 & JP 06 081 074 A
- CHEMICAL ABSTRACTS, vol. 94, no. 26, 29.Juni 1981 Columbus, Ohio, US; abstract no. 213268w, MATSUSHITA ELECTRIC WORKS: "calcium sulfoaluminate-based lightweight building materials" XP000184493 & JP 55 167 168 A
- CHEMICAL ABSTRACTS, vol. 104, no. 18, 5.Mai 1986 Columbus, Ohio, US; abstract no. 154681a, TAKADA ET AL.: "mortar composions" XP000184281 & JP 60 215 587 A
- CHEMICAL ABSTRACTS, vol. 107, no. 18, 2.November 1987 Columbus, Ohio, US; abstract no. 160439f, SUZUKI: "coal ash hardened bodies and their preparations" XP000187395 & JP 06 230 676 A
- CHEMICAL ABSTRACTS, vol. 107, no. 10, 7.September 1987 Columbus, Ohio, US; abstract no. 82840p, MARUICHI ET AL: "glass fiber-reinforced hardened cement body with high strength" XP000184254 & JP 62 105 980 A
- CHEMICAL ABSTRACTS, vol. 103, no. 2, 15.Juli 1985 Columbus, Ohio, US; abstract no. 10539s, MATSUSHITA ELECTRIC WORKS: "compositions for cement moldings" XP000125082 & JP 06 021 841 A

## Beschreibung

Die Erfindung betrifft ein Verfahren zum Herstellen von Baustoffen, wobei diese Baustoffe insbesondere Porenbeton oder Gasbeton sind.

Zur Herstellung von Porenbetonprodukten wird eine Porenbetonmasse üblicherweise aus den fein gemahlenen Komponenten Sand, Kalk, Zement, einem Sulfatträger sowie Wasser gemischt und in Formen gegossen, wobei die Porenbetonmasse mit geeigneten Mitteln aufgeschäumt wird. Eine bekannte Möglichkeit, eine Porenbetonmischung aufzuschäumen besteht darin, Aluminiumpulver in der Porenbetonmischung zu dispergieren, welches dann mit den, durch die Reaktion des Brantkalkes mit Wasser entstandenen OH⁻ Ionen reagiert, wobei Wasserstoff freigesetzt wird. Der freiwerdende Wasserstoff läßt die Porenbetonmischung auftreiben. Dieser Prozeß wird auch als Gärprozeß bezeichnet.

Anschließend bindet die Porenbetonmasse in den Formen ab, wobei die durch das Aufschäumen erzielten Poren erhalten bleiben.

Der so erhaltene, grünfeste Porenbetonkuchen wird anschließend ausgeformt und mit geeigneten Mitteln in die gewünschten Formate des Endproduktes geschnitten. Die geschnittenen Porenbetonkuchen werden in einem Autoklaven in bekannter Weise einer Dampfhärtung unterzogen. Nach der Dampfhärtung können die fertigen Porenbetonprodukte verpackt und versandt werden.

Bei der Herstellung solcher Porenbetonprodukte werden der Mischung Calciumsulfate zugesetzt. Ziel dieses Calciumsulfatzusatzes ist es, die Kristallinität des Porenbetons zu erhöhen. Eine steigende Kristallinität erhöht die Druckfestigkeit des Endproduktes, wobei auch andere Eigenschaften des Porenbetons, wie Schwindung und Bezugsfeuchte positiv beeinflußt werden.

Solche Zusätze von Calciumsulfatträgern sind in der DE-OS 1 646 580 erwähnt. Hier wird ein Verfahren beschrieben, bei dem der Porenbetonmischung außer Sand, Weißfeinkalk und Zement ein Calciumsulfat in einer Menge von ≥ 2,5 Gew.%, gerechnet als SO₃, zugesetzt wird. Hierdurch soll die Druckfestigkeit wesentlich erhöht und die zugesetzte Bindemittelmenge (Zement) verringert werden. Diese Calciumsulfate können dabei durch einen sulfatreichen Zement, durch einen mit dem Zement vermahlenen natürlichen Anhydrit, durch Flugasche oder andere geeignete Abfallprodukte, durch Anhydrit und/oder Gips oder durch verdünnte Schwefelsäure eingebracht werden.

Ein Nachteil des Einsatzes von Calciumsulfaten besteht darin, daß es abhängig von der zugesetzten Menge an Calciumsulfaten zu einer Agglomeration der Kalkkomponente und damit zu Inhomogenitäten in der Porenbetonmasse kommt. Dieser Nachteil besteht besonders bei den heute üblichen, weichgebrannten Kalken, so daß auf teurere, härter gebrannte Kalke ausgewichen werden muß.

Ein weiterer Nachteil des Einsatzes von Calciumsulfaten besteht in der durch sie verursachten starken Verzögerung der Hydratation des Kalkes und damit des Gärprozesses, wobei damit lange Standzeiten der Porenbetonmasse in den Formen verbunden sind.

Die Hydratationsverzögerung des Kalkes läßt sich auch durch kalkreiche Rezepturen mit Anhydrit oder Gipszusatz nicht kompensieren, da die löslichen Calciumsulfate neben ihrer verzögernden Wirkung gleichzeitig wegen der Agglomeration zu starken Gießinstabilitäten führen.

Darüber hinaus ist bei der Verwendung von Calciumsulfat nachteilig, besonders wenn wegen Gießinstabilität auf härter gebrannte Kalke ausgewichen wurde, daß durch die Verzögerung der Reaktion auch nach dem Schneiden des Porenbetonkuchens auf das Endmaß der fertigen Porenbetonprodukte noch Kalk hydratisiert. Da Kalk durch die Reaktion mit Wasser sein Volumen vergrößert, führt diese Expansion auch zu einer Expansion des geschnittenen Porenbetonprodukts. Diese Volumenausdehnung wird als Nachwachsen bezeichnet. Porenbetonprodukte, die dadurch außerhalb der sehr engen Maßtoleranzen liegen, können nicht mehr verkauft werden, womit erhebliche Kosten für den Hersteller verbunden sind.

Aus CA, 103, Nr. 12, 1985, 92132r sowie CA, 94, Nr. 26, 1981, 213268w und CA, 97, Nr. 8, 1982, 59966a sind Baustoffmischungen zur Herstellung von Porenbeton bekannt, die als Sulfatträger Calciumaluminiumsulfat aufweisen.

GB-A-2250282 beschreibt ähnliche Zusammensetzungen, die weiterhin gelöschten oder ungelöschten Kalk enthalten können.

Aufgabe der Erfindung ist es, ein Verfahren zu schaffen, mit dem Porenbetonprodukte einer hohen Kristallinität und Druckfestigkeit erzielt werden können, wobei durch den Sulfatträger verursachte Agglomerationen, Hydratationsreaktionsverzögerungen und Nachwachsen vermieden werden.

Eine weitere Aufgabe der Erfindung besteht darin, die Standzeiten der Porenbetonkuchen vom Gießen bis zum Schneiden zu verkürzen und die Anzahl der Formen zu reduzieren.

Diese Aufgaben werden mit einem Verfahren mit den Merkmalen des Anspruches 1 gelöst. Vorteilhafte Ausführungen sind in den Unteransprüchen gekennzeichnet.

Bei diesem Verfahren wird zumindest teilweise anstelle eines Calciumsulfates ein Calciumaluminatsulfat oder ein Calciumaluminatsulfathydrat als Sulfatträger eingesetzt, wobei ein Ausführungsbeispiel einer Porenbetonmischung nach dem erfindungsgemäßen Verfahren der folgenden Tabelle 1, Spalte III entnommen werden kann:

**Tabelle 1**

| | | I | II | III |
|---|---|---|---|---|
| Rezeptur | Quarzsand | 69,9 M% | 68,9 M% | 64,9 M% |
| | Branntkalk | 15,0 M% | 15,0 M% | 15,0 M% |
| | Zement | 15,0 M% | 15,0 M% | 15,0 M% |
| | Anhydrit | 0 M% | 2,0 M% | 0 M% |
| | Ettringit | 0 M% | 0 M% | 6,0 M% |
| | Alu-Pulver | 0,1 M% | 0,1 M% | 0,1 M% |
| Eigenschaften | Rohdichte | 450 kg/m³ | 450 kg/m³ | 450 kg/m³ |
| | Druckfestigkeit | 2,49 N/mm² | 2,75 N/mm² | 3,03 N/mm² |
| | E-Modul | 700 N/mm² | 800 N/mm² | 1020 N/mm² |
| | Schwindung | 0,51 mm/m | 0,24 mm/m | 0,18 mm/m |
| Kristallinität 3,08 Å | Int Toberm./ Int CaF₂ | 27 | 33 | 39 |

Überraschenderweise konnte festgestellt werden, daß ein solcher Sulfatträger nicht zu einer Verzögerung der Hydratation des Kalkes führt. Hierdurch werden kürzere Gärzeiten erreicht, wobei die Hydratation des Kalkes während dieser kurzen Gärzeiten soweit ablaufen kann, daß nach dem Schneiden bzw. während der Dampfbehandlung im Autoklaven keine schädliche Expansion, also Nachwachsen der Porenbetonprodukte, mehr auftritt.

Da ein Arbeitstakt vom Gießen bis zum Schneiden des grünfesten Porenbetons mit dem erfindungsgemäßen Verfahren von zuvor mehreren Stunden drastisch auf ca. 20 Minuten verkürzt werden kann, gelingt es, die Produktionsmenge einer bestehenden Anlage erheblich zu steigern.

Es wird mit dem erfindungsgemäßen Verfahren aber--auch ermöglicht, die Zahl der Formen und damit den Unterhaltungs- und Wartungsaufwand bei bestehenden Produktionsanlagen bei unveränderter Produktionsmenge zu senken.

Darüber hinaus wird er möglich, kleine Produktionsanlagen mit nur einer Form wirtschaftlich zu betreiben, wobei diese Form beispielsweise auch stationär betrieben werden kann. Um eine solche kleine Produktionsanlage betreiben zu können, mußten bislang Mischungen verwendet werden, die zwar schnell aufschäumten und erhärteten, da sie kaum Sulfat enthielten, aber bezüglich ihrer Eigenschaften wie Druckfestigkeit, Bezugsfeuchte oder Schwindung nicht die Güte von Mischungen, die Sulfat enthalten, erreichen konnten.

Mit dem erfindungsgemäßen Verfahren wird es erstmals ermöglicht, Porenbetonprodukte mit der hohen Qualität und Güte sulfathaltiger Mischungen in kleinen und Kleinstproduktionsanlagen mit nur einer Form in besonders wirtschaftlicher Art und Weise zu erzeugen.

Es konnte dabei festgestellt werden, daß sich eine Porenbetonrezeptur mit Ettringitzusatz genauso verhält wie eine Porenbetonrezeptur, die keinen der üblichen Sulfatträger enthält. Beispielsweise erreicht eine Porenbetonrezeptur mit Anhydrit als Sulfatzusatz nach 120 min eine maximale Temperatur von ca. 65°C, während Porenbetonrezepturen ohne üblichen Sulfatträgerzusatz oder mit Ettringit ihre maximale Temperatur nach 90 min erreichen.

Da Calciumaluminatsulfate bzw. deren Hydrate im richtigen Mischungsverhältnis beschleunigend auf den Zement wirken, können auf diese Weise auch Porenbetonrezepturen geschaffen werden, die in sehr kurzen Zeiten ihre Schneidreife erreichen. Besonders vorteilhaft wirken z.B. bei ca. 200°C entwässerter Ettringit.

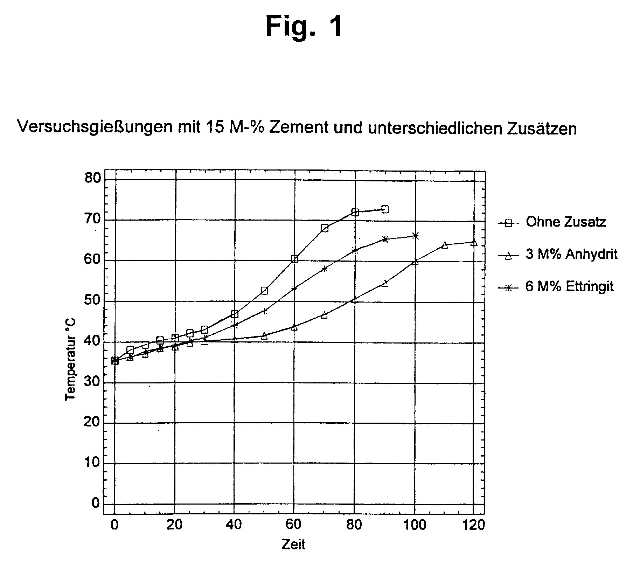

Figur 1 kann man entnehmen, daß die Temperaturverläufe beim Ansteifen von Versuchsgießungen bei der Verwendung von Ettringit und ohne Zusatz von Sulfatträgern qualitativ gleich sind.

Darüber hinaus hat sich herausgestellt, daß durch die Zugabe von Calciumaluminatsulfaten bzw. deren Hydrate die Agglomeration des Kalkes beim Mischen nicht mehr auftritt. Dadurch ist die Verteilung des Kalkes in der Porenbetonmischung homogener, wodurch ebenfalls der Gärverlauf beschleunigt wird. Desweiteren konnte festgestellt werden, daß durch die Zugabe von Calciumaluminatsulfaten die Kristallisation der Calciumsilikathydrate erheblich beeinflußt wird. Im Endprodukt kann überraschenderweise eine Änderung der Kristalle in Größe, Form, Anzahl und Verteilung festgestellt werden.

Hierbei ist insbesondere die Zahl der Kristalle niedriger als bei der Verwendung üblicher Sulfatträger, wie z.B. Gips. Dabei sind diese Kristalle gut und regelmäßig ausgebildet. Die Kristalle können dabei größer sein als bei der Verwendung herkömmlicher Sulfatträger, wobei überraschenderweise trotzdem Druckfestigkeiten erhalten werden, die mindestens so hoch sind, wie die Druckfestigkeiten bei der Verwendung herkömmlicher Sulfatträger.

Dies kann man auch aus der vorstehend gezeigten Tabelle 1 entnehmen. In der Tabelle sind die Eigenschaften von Porenbeton unterschiedlicher Rezepturen gegenübergestellt. Hierbei zeigt Spalte I eine Porenbetonrezeptur ohne Sulfatträgerzusatz, Spalte II eine Porenbetonrezeptur mit Anhydrit als Sulfatträgerzusatz und Spalte III eine Porenbetonrezeptur mit Ettringit als Sulfatträgerzusatz.

Spalte II kann man entnehmen, daß 2,0 M-% Anhydrit zugefügt wurden. Spalte III kann man entnehmen, daß hier 6,0 M-% Ettringit zugefügt wurden, wobei die Mengen an Sulfaten auf gleiche Mengen SO₃ bezogen wurden. Die wirksame Sulfatkonzentration bei beiden Zugaben ist also im wesentlichen gleich. Bei der Druckfestigkeit ergibt sich eine deutliche Steigerung durch Ettringitzugabe, wobei eine Steigerung auch bei der Entwicklung des E-Moduls festgestellt werden kann. Darüber hinaus kann mit einer Porenbetonrezeptur, die anstelle von Anhydrit Ettringit enthält, vorteilhafterweise auch eine geringere Schwindung erreicht werden, die sich ebenfalls aus den Spalten II und III der Tabelle 1 ergibt. Betrachtet man die Kristallinität, kann man auch hier eine deutliche Steigerung bei der Verwendung von Ettringit gegenüber der Verwendung von Anhydrit feststellen.

Calciumaluminatsulfate oder deren Hydrate, die nach dem erfindungsgemäßen Verfahren eingesetzt werden können, sind z.B. Ettringit (C₃A · 3CS · 32H) oder Monosulfat (C₃A · CS · 12H) bzw. Mischungen daraus, die mit allgemein bekannten Verfahren zur Herstellung von Ettringit erzeugt worden sein können. Die Formeln in Klammern entsprechen der in der Bindemittelchemie üblichen chemischen Kurznomenklatur (C = CaO, A = Al₂O₃, S = SO₃, H = H₂O).

Dabei besteht eine Möglichkeit der Zugabe der Calciumaluminatsulfate darin, diese dem Sand vor dem Mahlen zuzusetzen und gemeinsam mit diesem zu vermahlen. In vorteilhafter Weise geschieht dies zumindest mit Calciumaluminatsulfaten, die in luft-getrockneter Form vorliegen, da beim Mahlen in unkontrollierbarer Weise Kristallwasser ausgetrieben werden kann. Es ist daher vorteilhaft, die Calciumaluminatsulfate in calcinierter, d.h. entwässerter Form zuzusetzen. Dabei besteht ein Vorteil der Zugabe zum Sand vor dem Mahlen darin, daß die Calciumaluminatsulfate bzw. deren Hydrate besonders gut verteilt werden. Dies kann auch erreicht werden, wenn die Calciumaluminatsulfate in einem separaten Mischvorgang nach dem Mahlen des Sandes diesem zugegeben werden, wobei der Sulfatträger dann auch in hydratisierter Form eingesetzt werden kann, was besonders vorteilhaft ist, da der Sulfatträger dann das Mischen der Porenbetonmasse mit Wasser nicht durch eigene Hydratation beeinflußt.

Eine weitere Möglichkeit, die Calciumaluminatsulfate oder deren Hydrate in die Porenbetonmischung einzuführen ist, sie am Mischer zuzugeben. Hierbei kann in vorteilhafter Weise durch den Einsatz von dehydratisiertem Calciumaluminatsulfat durch dessen hohes Wasseraufnahmevermögen die Viskosität der Porenbetonmischung beeinflußt bzw. eingestellt werden. In besonders vorteilhafter Weise kann diese Einstellung über ein Gemisch aus Calciumaluminatsulfat und Calciumaluminatsulfathydrat erfolgen.

Eine andere Möglichkeit, Calciumaluminatsulfathydrate bzw. Calciumaluminatsulfate zuzufügen ist, diese zuvor in Wasser zu dispergieren und dann dem Mischer zuzugeben. Hierdurch kann ebenfalls eine besonders gute Verteilung der Calciumaluminatsulfathydrate in der Porenbetonmischung erreicht werden. In vorteilhafter Weise kann eine solche Suspension auch dadurch erzeugt werden, daß Calciumsulfate, z.B. Gips, und geeignete Calciumaluminate, z.B. C₃A, in Wasser gelöst werden. Hierdurch bildet sich Ettringit, wobei ein gewünschtes Ettringit/Gips-Verhältnis bei nur teilweise gewünschtem Ersetzen von Calciumsulfaten durch Calciumaluminatsulfate, hier in vorteilhafter Weise durch den Calciumaluminatzusatz gesteuert werden kann.

Die Erfindung schafft ein Verfahren, welches die Herstellung von Porenbeton ohne Agglomeration der Kalkkomponente, Hydratationsverzögerung und calciumsulfatbedingtes Nachwachsen ermöglicht, wobei das fertige Produkt eine gute Kristallinität und eine gute Druckfestigkeit aufweist.

Durch die fehlende Agglomeration des Kalkes wird der Kalk in der Porenbetonmischung feiner verteilt, wodurch die Reaktivität steigt und sich die Gärzeiten verkürzen. Eine Verkürzung der Gärzeiten wird auch dadurch erreicht, daß die Kalkhydratation nicht verzögert wird. Durch verminderte Gärzeiten kann die Produktionsmenge durch die Verkürzung der Taktzeiten erheblich gesteigert werden, ohne daß zusätzliche Formen eingesetzt werden.

In vorteilhafter Weise ermöglicht das erfindungsgemäße Verfahren jedoch auch kleine Produktionsstätten mit wenigen bzw. nur einer Form wirtschaftlich zu betreiben und mit dem erfindungsgemäßen Verfahren hierbei auch qualitativ hochwertige Produkte mit hoher Druckfestigkeit zu erhalten.

Da auch das Nachwachsen mit diesen Sulfatträgern nicht auftritt, werden auch hier in erheblichem Maße Kosten eingespart.

## Patentansprüche

1. Verfahren zum Herstellen von Baustoffen, insbesondere Leichtbaustoffen, wie Porenbeton, wobei an sich bekannte Komponenten Sand, Brantkalk, Zement und ein Sulfatträger sowie Wasser und an sich bekannte und geeignete Porenbildner gemischt werden und die Mischung in Formen gegossen wird,
**dadurch gekennzeichnet,**
daß als Sulfatträger mindestens zu einem Teil ein Calciumaluminatsulfat und/oder ein Calciumaluminatsulfathydrat verwendet wird.

2. Verfahren nach Anspruch 1,
**dadurch gekennzeichnet,**
daß das verwendete Calciumaluminatsulfathydrat Ettringit (C₃A · 3CS · 32H) ist.

3. Verfahren nach Anspruch 1,
**dadurch gekennzeichnet**,
daß das verwendete Calciumaluminatsulfathydrat ein Monosulfat (C₃A · CS · 12H) ist.

4. Verfahren nach Anspruch 1,
**dadurch gekennzeichnet**,
daß der verwendete Sulfatträger eine Mischung aus Ettringit und Monosulfat ist.

5. Verfahren nach Anspruch 1,
**dadurch gekennzeichnet,**
daß das verwendete Calciumaluminatsulfat und/oder Calciumaluminatsulfathydrat in lufttrockener, getrockneter oder calcinierter Form verwendet wird.

6. Verfahren nach Anspruch 1,
**dadurch gekennzeichnet,**
daß der Sulfatträger eine Mischung aus Calciumaluminatsulfaten und Calciumaluminatsulfathydraten ist.

7. Verfahren nach Anspruch 1,
**dadurch gekennzeichnet,**
daß der Sulfatträger in fein gemahlener Form verwendet wird.

8. Verfahren nach Anspruch 1,
**dadurch gekennzeichnet**,
daß der Sulfatträger dispergiert und als Suspension verwendet wird.

9. Verfahren nach Anspruch 1,
**dadurch gekennzeichnet**,
daß der Sulfatträger mit dem Sand der Porenbetonmischung gemeinsam vermahlen wird.

10. Verfahren nach Anspruch 1,
**dadurch gekennzeichnet,**
daß der Sulfatträger dem Sand nach dem Mahlen zugesetzt und mit diesem gemischt wird, wobei der Sulfatträger als Hydrat in lufttrockener Form eingesetzt wird.

11. Verfahren nach Anspruch 1,
**dadurch gekennzeichnet**,
daß der Sulfatträger dem Mischer zugegeben wird.

12. Verfahren nach Anspruch 11,
**dadurch gekennzeichnet**,
daß der Sulfatträger in Wasser dispergiert und dann dem Mischer zugegeben wird.

13. Verfahren nach Anspruch 1,
**dadurch gekennzeichnet**,
daß eine Mischung aus Calciumaluminatsulfaten und Calciumaluminatsulfathydraten dem Mischer zugegeben wird und damit die Viskosität der Porenbetonmischung beeinflußt wird.

14. Verfahren nach Anspruch 8,
**dadurch gekennzeichnet**,
daß der Sulfatträger durch das gemeinsame Vermischen von Wasser, Calciumsulfat und Calciumaluminaten erzeugt wird, wobei das entstehende Calciumaluminatsulfathydrat und das Restwasser der Mischung zugegeben werden.

15. Verfahren nach Anspruch 8,
**dadurch gekennzeichnet**,
daß der Sulfatträger durch das gemeinsame Vermischen von Wasser, Calciumsulfaten und Calciumaluminaten erzeugt wird, wobei ein gewünschtes Verhältnis von Calciumsulfathydraten zu Calciumaluminatsulfathydraten über die Zugabe von Calciumaluminaten eingestellt wird.

16. Verfahren nach Anspruch 1,
**dadurch gekennzeichnet**,
daß eine einzige Form für die Herstellung der Porenbetonprodukte verwendet wird, wobei die eine Form mit der Mischung befüllt wird, die Zeit bis zur Grünfestigkeit des Porenbetonkuchens abgewartet wird, dieser dann ausgeformt wird und die Form anschließend wieder befüllt wird.

17. Verfahren nach Anspruch 13,
**dadurch gekennzeichnet**,
daß eine einzige Form für die Herstellung der Porenbetonprodukte verwendet wird, wobei diese Form mit der Mischung befüllt wird, die Zeit bis zur Grünfestigkeit des Porenbetonkuchens abgewartet wird, dieser dann ausgeformt wird und die Form anschließend wieder befüllt wird.

18. Verfahren nach Anspruch 14,
**dadurch gekennzeichnet**,
daß eine einzige Form für die Herstellung der Porenbetonprodukte verwendet wird, wobei die eine Form mit der Mischung befüllt wird, die Zeit bis zur Grünfestigkeit des Porenbetonkuchens abgewartet wird, dieser dann ausgeformt wird und die Form anschließend wieder befüllt wird.

19. Verfahren nach Anspruch 15,
**dadurch gekennzeichnet**,
daß eine einzige Form für die Herstellung der Porenbetonprodukte verwendet wird, wobei die eine Form mit der Mischung befüllt wird, die Zeit bis zur Grünfestigkeit des Porenbetonkuchens abgewartet wird, dieser dann ausgeformt wird und die Form anschließend wieder befüllt wird.

20. Verfahren nach Anspruch 1,
**dadurch gekennzeichnet**,
daß nur eine einzige Form für die Herstellung der Porenbetonprodukte verwendet wird, wobei die Form fest bzw. stationär in der Produktionsanlage angeordnet ist.

21. Verfahren nach Anspruch 16,
**dadurch gekennzeichnet,**
daß nur eine einzige Form für die Herstellung der Porenbetonprodukte verwendet wird, wobei die Form fest bzw. stationär in der Produktionsanlage angeordnet ist.

22. Verfahren nach Anspruch 1,
**dadurch gekennzeichnet**,
daß ein Arbeitstakt vom Befüllen der Form über das Aufgären des Porenbetonkuchens, das Erreichen der Grünfestigkeit des Porenbetons bis einschließlich zur Ausformung des Porenbetonkuchens reicht und ein solcher Arbeitstakt weniger als eine Stunde durchgeführt wird.

23. Verfahren nach Anspruch 20,
**dadurch gekennzeichnet,**
daß ein Arbeitstakt vom Befüllen der Form über das Aufgären des Porenbetonkuchens, das Erreichen der Grünfestigkeit des Porenbetons bis einschließlich zur Ausformung des Porenbetonkuchens reicht und ein solcher Arbeitstakt weniger als eine Stunde durchgeführt wird.

24. Verfahren nach Anspruch 21,
**dadurch gekennzeichnet,**
daß ein Arbeitstakt vom Befüllen der Form über das Aufgären des Porenbetonkuchens, das Erreichen der Grünfestigkeit des Porenbetons bis einschließlich zur Ausformung des Porenbetonkuchens reicht und ein solcher Arbeitstakt weniger als eine Stunde durchgeführt wird.

25. Verfahren nach Anspruch 22,
**dadurch gekennzeichnet**,
daß ein Arbeitstakt 10 bis 20 Minuten durchgeführt wird.

26. Verfahren nach Anspruch 24,
**dadurch gekennzeichnet**,
daß ein Arbeitstakt 10 bis 20 Minuten durchgeführt wird.

## Claims

1. A process for producing building materials, especially lightweight building materials, such as cellular concrete, wherein the conventional components sand, burnt lime, cement and a sulphate ingredient as well as water and conventional and suitable poreformers are mixed and the mixture is poured into moulds,
characterized in that
the sulphate ingredient used is at least in part a calcium aluminate sulphate and/or a calcium aluminate sulphate hydrate.

2. A process according to Claim 1,
characterized in that
the calcium aluminate sulphate hydrate used is ettringite (C₃A · 3CS · 32H).

3. A process according to Claim 1,
characterized in that
the calcium aluminate sulphate hydrate used is a monosulphate (C₃A · CS · 12H).

4. A process according to Claim 1,
characterized in that
the sulphate ingredient used is a mixture of ettringite and monosulphate.

5. A process according to Claim 1,
characterized in that
the calcium aluminate sulphate and/or calcium aluminate sulphate hydrate used is used in air-dry, dried or calcined form.

6. A process according to Claim 1,
characterized in that
the sulphate ingredient is a mixture of calcium aluminate sulphates and calcium aluminate sulphate hydrates.

7. A process according to Claim 1,
characterized in that
the sulphate ingredient is used in finely ground form.

8. A process according to Claim 1,
characterized in that
the sulphate ingredient is dispersed and used as suspension.

9. A process according to Claim 1,
characterized in that
the sulphate ingredient is conjointly ground with the sand of the cellular concrete mix.

10. A process according to Claim 1,
characterized in that
the sulphate ingredient is added to the sand after grinding and mixed with the sand, the sulphate ingredient being used as hydrate in air-dry form.

11. A process according to Claim 1,
characterized in that
the sulphate ingredient is added to the mixer.

12. A process according to Claim 11,
characterized in that
the sulphate ingredient is dispersed in water and then added to the mixer.

13. A process according to Claim 1,
characterized in that
a mixture of calcium aluminate sulphates and calcium aluminate sulphate hydrates is added to the mixer to influence the viscosity of the cellular concrete mix.

14. A process according to Claim 8,
characterized in that
the sulphate ingredient is generated by conjoint mixing of water, calcium sulphate and calcium aluminates and the resulting calcium aluminate sulphate hydrate and the residual water are added to the mix.

15. A process according to Claim 8,
characterized in that
the sulphate ingredient is generated by conjoint mixing of water, calcium sulphates and calcium aluminates, a desired ratio of calcium sulphate hydrates to calcium aluminate sulphate hydrates being set via the addition of calcium aluminates.

16. A process according to Claim 1,
characterized in that
a single mould is used for producing the cellular concrete products by filling the mould with the mix, waiting until the cellular concrete cake has acquired green strength, then demoulding the cellular concrete cake and subsequently refilling the mould.

17. A process according to Claim 13,
characterized in that
a single mould is used for producing the cellular concrete products by filling the mould with the mix, waiting until the cellular concrete cake has acquired green strength, then demoulding the cellular concrete cake and subsequently refilling the mould.

18. A process according to Claim 14,
characterized in that
a single mould is used for producing the cellular concrete products by filling the mould with the mix, waiting until the cellular concrete cake has acquired green strength, then demoulding the cellular concrete cake and subsequently refilling the mould.

19. A process according to Claim 15,
characterized in that
a single mould is used for producing the cellular concrete products by filling the mould with the mix, waiting until the cellular concrete cake has acquired green strength, then demoulding the cellular concrete cake and subsequently refilling the mould.

20. A process according to Claim 1,
characterized in that
just a single mould is used for producing the cellular concrete products and the mould is fixedly or stationarily disposed in the production plant.

21. A process according to Claim 16,
characterized in that
just a single mould is used for producing the cellular concrete products and the mould is fixedly or stationarily disposed in the production plant.

22. A process according to Claim 1,
characterized in that
a work cycle ranges from the mould being filled to the rising of the cellular concrete cake, to the attainment of green strength on the part of the cellular concrete, to the cellular concrete cake being demoulded and one such work cycle is carried out in less than one hour.

23. A process according to Claim 20,
characterized in that
a work cycle ranges from the mould being filled to the rising of the cellular concrete cake, to the attainment of green strength on the part of the cellular concrete, to the cellular concrete cake being demoulded and one such work cycle is carried out in less than one hour.

24. A process according to Claim 21,
characterized in that
a work cycle ranges from the mould being filled to the rising of the cellular concrete cake, to the attainment of green strength on the part of the cellular concrete, to the cellular concrete cake being demoulded and one such work cycle is carried out in less than one hour.

25. A process according to Claim 22,
characterized in that
one work cycle is carried out in 10 to 20 minutes.

26. A process according to Claim 24,
characterized in that
one work cycle is carried out in 10 to 20 minutes.

## Revendications

1. Procédé de fabrication de matériaux de construction, en particulier de matériaux de construction légers comme le béton cellulaire, dans lequel on mélange des constituants connus en soi, sable, chaux vive, ciment et un support de sulfate, ainsi que de l'eau et des agents porogènes connus en soi et appropriés et on coule le mélange dans des moules, caractérisé en ce qu'on utilise comme support de sulfate, au moins en partie, un sulfoaluminate de calcium et/ou un sulfoaluminate de calcium hydraté.

2. Procédé selon la revendication 1, caractérisé en ce que le sulfoaluminate de calcium hydraté utilisé est de l'ettringite (C₃A . 3CS. 32H).

3. Procédé selon la revendication 1, caractérisé en ce que le sulfoaluminate de calcium hydraté utilisé est un monosulfate (C₃A. CS. 12 H).

4. Procédé selon la revendication 1, caractérisé en ce que le support de sulfate utilisé est un mélange d'ettringite et de monosulfate.

5. Procédé selon la revendication 1, caractérisé en ce que le sulfoaluminate de calcium utilisé et/ou le sulfoaluminate de calcium hydraté sont utilisés sous une forme sèche à l'air, séchée ou calcinée.

6. Procédé selon la revendication 1, caractérisé en ce que le support de sulfate est un mélange de sulfoaluminates de calcium et de sulfoaluminates de calcium hydratés.

7. Procédé selon la revendication 1, caractérisé en ce que le support de sulfate est utilisé sous une forme finement broyée.

8. Procédé selon la revendication 1, caractérisé en ce que le support de sulfate est dispersé et utilisé sous la forme d'une suspension.

9. Procédé selon la revendication 1, caractérisé en ce que le support de sulfate est broyé conjointement avec le sable du mélange de béton cellulaire.

10. Procédé selon la revendication 1, caractérisé en ce que le support de sulfate est ajouté au sable après le broyage et mélangé avec celui-ci, le support de sulfate étant utilisé sous forme de son hydrate sec à l'air.

11. Procédé selon la revendication 1, caractérisé en ce que le support de sulfate est ajouté au mélangeur.

12. Procédé selon la revendication 11, caractérisé en ce que le support de sulfate est dispersé dans l'eau puis ajouté au mélangeur.

13. Procédé selon la revendication 1, caractérisé en ce qu'on ajoute au mélangeur un mélange de sulfoaluminates de calcium et de sulfoaluminates de calcium hydratés et qu'on agit par ce moyen sur la viscosité du mélange de béton cellulaire.

14. Procédé selon la revendication 8, caractérisé en ce que le support de sulfate est produit en mélangeant ensemble de l'eau, du sulfate de calcium et des aluminates de calcium, le sulfoaluminate de calcium hydraté obtenu et le reste de l'eau étant ajoutés au mélange.

15. Procédé selon la revendication 8, caractérisé en ce que le support de sulfate est produit en mélangeant ensemble de l'eau, des sulfates de calcium et des aluminates de calcium, le rapport souhaité entre les sulfates de calcium hydratés et les sulfoaluminates de calcium hydratés étant ajusté par l'addition d'aluminates de calcium.

16. Procédé selon la revendication 1, caractérisé en ce qu'on utilise un seul moule pour la fabrication des produits en béton cellulaire, on remplit le moule avec le mélange, on attend jusqu'à la consolidation à vert du gâteau de béton cellulaire, on démoule ce gâteau et, ensuite, on remplit de nouveau le moule.

17. Procédé selon la revendication 13, caractérisé en ce qu'on utilise un seul moule pour la fabrication des produits en béton cellulaire, auquel cas on remplit ce moule avec le mélange, on attend jusqu'à la consolidation à vert du gâteau de béton cellulaire, on démoule ce gâteau et, ensuite, on remplit de nouveau le moule.

18. Procédé selon la revendication 14, caractérisé en ce qu'on utilise un seul moule pour la fabrication des produits en béton cellulaire, auquel cas on remplit le moule avec le mélange, on attend jusqu'à la consolidation à vert du gâteau de béton cellulaire, on démoule ce gâteau et, ensuite, on remplit de nouveau le moule.

19. Procédé selon la revendication 15, caractérisé en ce qu'on utilise un seul moule pour la fabrication des produits en béton cellulaire, auquel cas on remplit le moule avec le mélange, on attend jusqu'à la consolidation à vert du gâteau de béton cellulaire, on démoule ce gâteau et, ensuite, on remplit de nouveau le moule.

20. Procédé selon la revendication 1, caractérisé en ce qu'on n'utilise qu'un seul moule pour la fabrication des produits en béton cellulaire, le moule étant disposé fixe ou stationnaire dans l'installation de production.

21. Procédé selon la revendication 16, caractérisé en ce qu'on n'utilise qu'un seul moule pour la fabrication des produits en béton cellulaire, le moule étant disposé fixe ou stationnaire dans l'installation de production.

22. Procédé selon la revendication 1, caractérisé en ce qu'un cycle de travail s'étend du remplissage du moule jusqu'à et y compris le démoulage du gâteau de béton cellulaire, en passant par la fermentation du gâteau de béton cellulaire et l'obtention de la consolidation à vert du béton cellulaire, et un tel cycle de travail est exécuté en moins d'une heure.

23. Procédé selon la revendication 20, caractérisé en ce qu'un cycle de travail s'étend du remplissage du moule jusqu'à et y compris le démoulage du gâteau de béton cellulaire, en passant par la fermentation du gâteau de béton cellulaire et l'obtention de la consolidation à vert du béton cellulaire, et un tel cycle de travail est exécuté en moins d'une heure.

24. Procédé selon la revendication 21, caractérisé en ce qu'un cycle de travail s'étend du remplissage du moule jusqu'à et y compris le démoulage du gâteau de béton cellulaire, en passant par la fermentation du gâteau de béton cellulaire et l'obtention de la consolidation à vert du béton cellulaire, et un tel cycle de travail est exécuté en moins d'une heure.

25. Procédé selon la revendication 22, caractérisé en ce qu'un cycle de travail est exécuté en 10 à 20 minutes.

26. Procédé selon la revendication 24, caractérisé en ce qu'un cycle de travail est exécuté en 10 à 20 minutes.
